# EUROPEAN PATENT SPECIFICATION

(11) **EP 1 943 168 B1**
(45) Date of publication and mention of the grant of the patent: **29.06.2011**
(21) Application number: 06783982.9
(22) Date of filing: 17.08.2006
(51) Int. Cl.: B65G 21/06, B65G 21/10, B65G 15/24, B65G 23/44, B65G 39/12

(54) **IMPROVEMENTS IN A CONVEYOR SYSTEM**
VERBESSERUNGEN BEI EINEM FÖRDERERSYSTEM
AMELIORATIONS APPORTEES A UN SYSTEME DE TRANSPORT

(30) Priority: 19.08.2005 NO 20053901
(43) Date of publication of application: 16.07.2008
(60) Divisional application: 10185780.3
(73) Proprietor: Bugge, Niels, 3142 Vestskogen (NO)
(72) Inventor: Bugge, Niels, 3142 Vestskogen (NO)
(74) Representative: Tofting, Arild
(86) International application number: PCT/NO2006/000296
(87) International publication number: WO 2007/021196

(56) References cited:
- EP-A1- 0 492 058
- DE-U1- 8 407 676
- GB-A- 646 190
- US-A- 3 593 591
- US-A- 5 749 659
- US-A1- 2004 089 522

## Description

### TECHNICAL FIELD

This invention is related to conveyor systems. More specifically, this invention is related to the mounting, alignment and operation of a modularized conveyor system based on a moving band for conveyance.

Conveyors are used in various types of industries and equipment as a way to transport goods and particulate material. Conveyor bands on conveyors need to be aligned along a longitudinal axis of the conveyor. Each application of a conveyor may need a different length of conveyor or a possibility to easily change the length of the conveyor system to suit the intended application.

### BACKGROUND OF THE INVENTION

Many problems associated with the alignment of conveyor systems have been addressed previously, e.g. in US 6,902,053 B1 the problem of band alignment has been addressed. Anyone requiring to acquire and use such a conveyor system in an efficient manner will look for solutions that enables an easy mounting and alignment. Typically, such conveyor systems are fairly elaborate and it is time consuming to handle a large number of different parts.

Patent publication GB 646,190 relates to connecting endless belt conveyors together, also when misalignments for different reasons exist. More specifically, means are desribed in order to adjust the position of bearing members supporting the belts.

In US patent no. 6,427,839 there is disclosed a convertible conveyor bed. The mortise and tenon couplings as well as the notches and rungs are adopted to facilitate frequent cycles of disassembly and reassembly of the conveyor bed for maintenance operations such as hose-down or clean-up. However, it is not shown any means to connect several modules to a continuous conveyor.

US 1,603,634 shows two brackets each being connected to its conveyor module. The brackets can be interconnected to connect the two modules. The brackets do not have any support for the drums. Thus, the drums must be supported by means of separate support units. This result is that a conveyor system will have a substantial number of parts.

Further, it is disclosed in US 1,603,634 several types of brackets on each side of the conveyor system. On one side, it looks like two similar brackets are provided, while on the other side a connecting system is provided where one of the parts is integrated in the side element of the conveyor. The reason for this, is that the connection parts for the drive shaft must be lead straight towards each other to connect. If similar brackets are provided on both sides, one must lower one of the conveyor modules down towards the other during connection. Thus, the connection parts will not connect. Consequently, this way one can only connect the modules on the opposite side, while the side comprising the connection parts must have a connection system where the modules can be lead towards each other in the same plane.

US 2,638,204 describes a conveyor system where the band drums are supported in the conveyor frame. The frame is then supported in cradles in a support. However, this support does not carry the drums, as these are carried by support rollers. The support cradles are only arranged to sideways stabilize the drums, as the drums, i.e. the frame, can move vertically in relation to the support and never bear against the cradle bottom. The cradles are in this manner not a support of the drums in themselves, as the support is done in the frame. However, the support rolls are supported in the support.

The main function of the support is to keep the frames in the two conveyors in a fixed lengthwise position in relation to each other. Thus, it is not used one support for connection of two conveyors. Thus, it is not possible to connect both modules so that they are self-supporting before one carries out the connection of these.

US 5,096,045 describes, as in US 2,638,204, the use of one connection unit in each connection point. Moreover, the drums are supported in separate support means in the conveyor frame. This complicates the system and it will not be possible to quickly connect two conveyor modules, i.a. because one must introduce a new element which will not be present until the conveyor system is going to be upgraded.

US 6,422,382 describes a bracket for support of a spindle. However, the bracket is not arranged to connect two conveyor modules. If two conveyor modules is going to be connected, one will need additional units for this.

It is an object of the present invention to provide a new conveyor system which is modular, reconfigurable, reusable, scaleable, and/or transformable in as many aspects as possible.

It is further an object of the present invention to provide a new and improved conveyor system in which individual parts may be assembled and disassembly readily using a minimum of tools in order reduce the time for mounting such a system and the downtime of such a system due maintenance or repairs. It is especially an object to connect, simple and flexible, two or more conveyor modules to a conveyor system, and achieve the following:
- Modules being self-supporting independent of the connection
- Integration of connecting means and support of rollers.
- The same type of brackets in all connection points between modules.
- No need to introduce essential additional parts to connect two modules.

### SUMMARY OF THE INVENTION

In a first aspect of the invention the objective as stated above is achieved by a bracket for use in the coupling of modules of a conveyor system. The coupling bracket comprises a main body, first coupling details for allowing demountable mechanical coupling of said main body as a part of a first conveyor system module, and a support for supporting a conveyor band guiding arrangement associated with the said first conveyor module. The bracket is distinguished in that it further comprises second coupling details for allowing mechanical coupling of said module to a second conveyor system module having a similar coupling bracket, wherein the second coupling details are a generally cylindrical hole defined by said main body and designed to receive one end of a generally cylindrical pin having a standard dimension.

In the second aspect of the invention the objective as set forth above is achieved by a bracket arrangement for coupling two conveyor system modules of a conveyor system. A first and second coupling bracket forms a first pair of brackets. The first pair of brackets is attachable to a first conveyor system module. The first pair of brackets has first support means for supporting a first band drum. The first band drum is part of a band path of the first conveyor system module. A third and a fourth coupling bracket forming a second pair of brackets being attachable to a second conveyor system module. The second pair of brackets comprises second support means for supporting a second band drum. The seconde band drum is part of a band path of the second conveyor system module. The first bracket coupling means mechanically couples the first and the third bracket, and the second bracket coupling means mechanically couples the second and fourth bracket. The first and second coupling means effectively couples said first and second conveyor system modules into a modularized conveyor system. The bracket arrangement is distinguished in that it comprises a bracket comprising second coupling details for allowing mechanical coupling of a module to a further conveyor system module having a similar coupling bracket, wherein said second coupling details are a generally cylindrical hole defined by said main body and designed to receive one end of a generally cylindrical pin having a standard dimension.

In one alternative embodiment of the bracket arrangement according to the second aspect of the invention a cylindrical pin is arranged between and parallel with the first band drum associated with a first conveyor system module and a second band drum associated with a second conveyor system module.

In another alternative embodiment of the bracket arrangement according to the second aspect of the invention a cylindrical pin has its first end arranged in a first recess. The interior surface of the recess is shaped as a segment of a cylinder defined by the first and third brackets. A second end of the pin is arranged in a second recess defined by the second and fourth brackets.

In another version of the embodiment of the coupling bracket arrangement according to the second aspect of the invention having a cylindrical pin the pin is arranged at a position so as to form an auxiliary support surface for an object being transported on the conveyor bands while the object is in transfer from the first conveyor system module to the second conveyor system module.

In another version of the embodiment of the coupling bracket arrangement according to the second aspect having a cylindrical pin, the pin has a standard diameter and said recesses are designed to allocate a pin of such standard diameter.

In a third aspect of the invention the objectives set forth above are achieved by a conveyor system comprising at least two conveyor system modules where each module comprises a separate band and corresponding band driving mechanisms. The conveyor system modules are coupled by a conveyor system coupling bracket arrangement as stated above.

The various aspects of the invention will now be explained in some more detail with reference to the appended drawings:

### BRIEF DESCRIPTION OF THE DRAWINGS

- Figure 1: illustrates an example embodiment of a conveyor system module with mounting parts according to the invention.
- Figure 2: illustrates a conveyor system module profile element defining a hole for allowing the insertion of the driving mechanism mounting bracket according to the invention.
- Figure 3: illustrates a coupling bracket and a leg mounting bracket mounted as part of an embodiment of a conveyor system module according to the invention.
- Figure 4: illustrates a detailed view of an example embodiment of the leg mounting bracket in the invention.
- Figure 5: illustrates a detailed view of an example embodiment of a coupling bracket according to the invention.
- Figure 6: illustrates an example embodiment of a conveyor system module with a conveyor driving mechanism mounting bracket according to the invention.
- Figure 7: illustrates a more detailed view of a driving mechanism mounting bracket according to the invention.
- Figure 8: illustrates guide/leg mounting brackets according to the invention as mounted onto conveyor system support elements and also carrying a guide system.
- Figure 9: illustrates the two parts of a coupling bracket according to the invention where a cylindrical rolling pin is arranged to assist the transported items over the area of the adjoining conveyor system modules.
- Figure 10A: illustrates an example embodiment of a conveyor system according to the system in which several modules are connected together using the coupling brackets, and where the height of the conveyor band is varied.
- Figure 10B: illustrates a detail of the conveyor system shown in Figure 10A.
- Figure 11: illustrates how individual modules in a multi-module conveyor system can be arranged so as to be tilted.

### DETAILED DESCRIPTION OF THE INVENTION

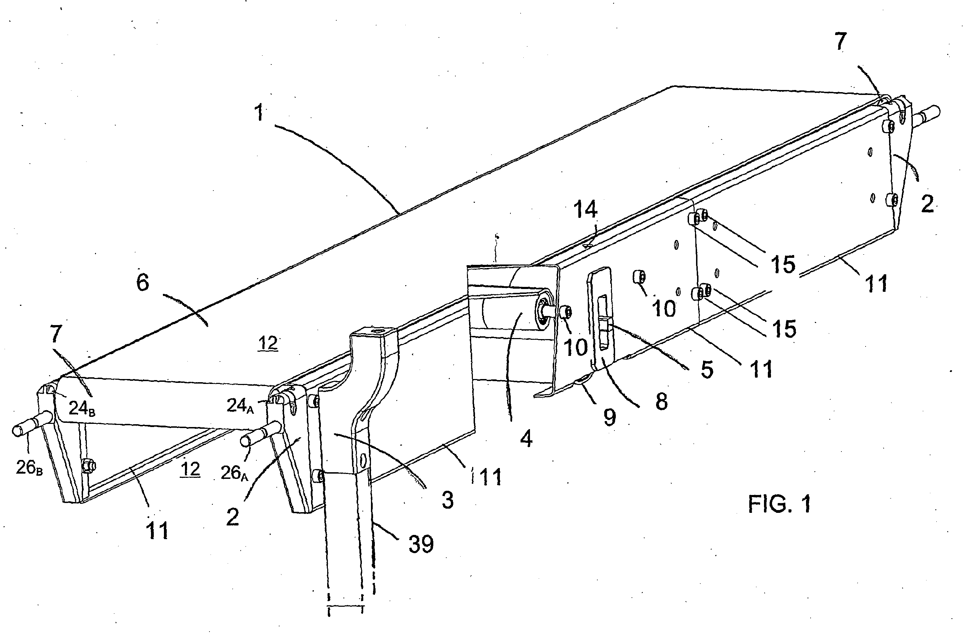

Figure 1 shows one example of a system module 1 of a conveyor system illustrating the various aspects of this invention. A conveyor system may consist of any number of conveyor system modules 1 coupled together.

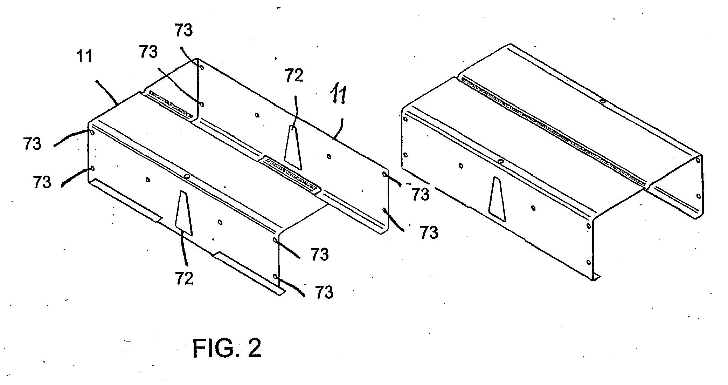

Each conveyor system module is built around one or more profile elements 11. Figure 2 illustrates one example of a profile element 11 which used as a part of or in connection with various aspects of this invention. Each profile element 11 has a generally U-shaped, flat-bottomed form. In the conveyor system shown in Figure 1, the profile elements 11 are mounted as an upside-down U. The ends of the legs of the U-shape are bent close to a right angle towards each other, so that the two ends are generally directed towards each other. A conveyor system module 1 may comprise a number of profile elements connected in series. The profile elements 11 define a transport volume 12 in which a conveyor band 6 is moving to transport objects 44. The widths of the profile elements 11 define the width of the conveyor system module 1. The outside of the flat-bottomed, U-shaped, profile element 11 defines a sliding surface for a conveyor band 6. A longitudinally directed groove or notch in the profile element 11 may be provided in order that a corresponding longitudinal rib of the conveyor band may follow or be guided by the groove or notch.

The conveyor band 6 in the transport volume 12 will typically be arranged as an endless loop extending between two band-supporting wheel-like structures, preferably cylindrically shaped drums 7, each drum 7 rotatably mounted on a drum axle shaft 50 extending over said transport space between two coupling brackets 2. Each end of each drum axle shaft 50 is detachably arranged in a support 22 of the main body of each respective coupling bracket 2. Each drum axle 50 is mounted so that each shaft extends in a direction substantially transversal to the longitudinal direction of the conveyor band 6, i.e. transversally to the direction of movement of the band 6 when the conveyor is in operation.

A transport band 6 is thus arranged at least partially around at least two band drums 7 in order that the band 6 when moving provides conveyance of objects resting freely upon, is held by, or is attached to the transport band 6.

On Figure 1 the axle shaft receptacle details are defined by a coupling bracket 2 used to join two conveyor system modules together thereby enabling the construction of more complex conveyor systems based on a number of joined conveyor system modules 1.

Each conveyor system module 1 will have a number of leg brackets 3, typically at least four leg brackets, one attached at or near each corner of each conveyor system module 1, possibly also several additional legs attached to each profile element 11.

Figure 1 also illustrates a leg bracket 3 which is attachable to a part of a profile element 11. The coupling bracket 2 also provides correct alignment of two transport conveyor modules 1.

Each of the two opposingly arranged profile units of the conveyor system module 1 is on Figure 1 shown to comprise three profile elements 11 connected in series. One end of a motor axle 5 of a cylinder engine is shown to be placed in a hole in a band drive mounting bracket 8, said band drive mounting bracket 8 being inserted in an insert hole defined by the profile element 11. The other end of the motor axle 5 is mounted in a corresponding facing hole defined by a corresponding facing profile element (not shown). The band drive mounting bracket 11 provides both a means for mounting a band drive mechanism and a means for keeping the band tight during operation.

The details of the coupling bracket 2, the leg bracket 2 and the conveyor drive mechanism bracket 8 and their functions will now be described in more detail.

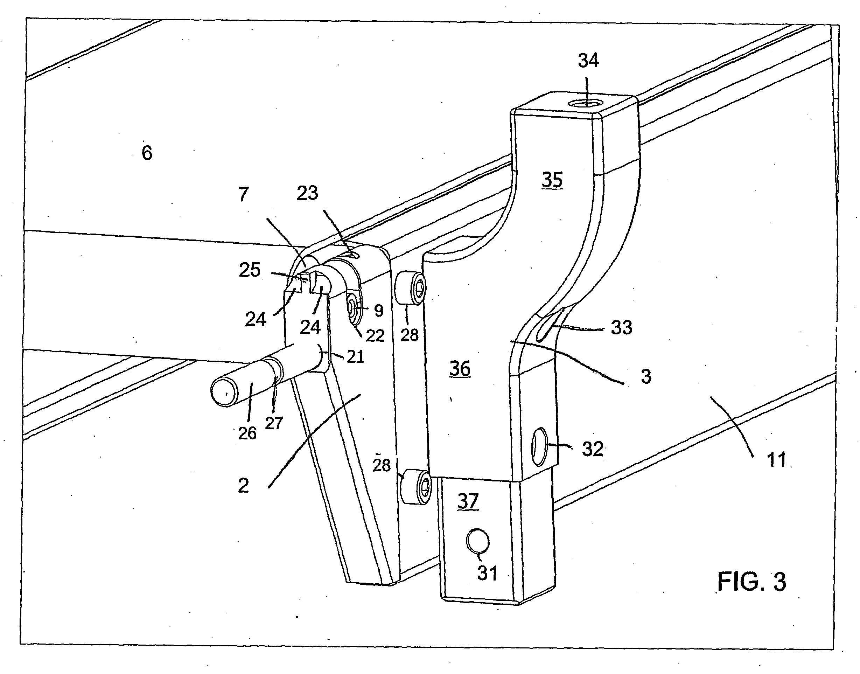

First with reference to Figure 3 there is shown a corner section of a conveyor system module 1 having a coupling bracket. The coupling bracket comprises a main body 2 and a first set of coupling details 28,29 for allowing demountable mechanical coupling of the main body 2 as part of a first conveyor system module 1. On the coupling bracket main body 2 there is provided a support 22 for supporting a conveyor band drum 7 for guiding the conveyor band 6 of the first conveyor system module 1. A second set of coupling details 21,26 allows for mechanical coupling of the conveyor system module 1 to a similar second conveyor system module having a similar coupling bracket. For simplicity the second conveyor system module is not illustrated on Figure 1.

The second coupling details 21,26 may be a joining pin 26 inserted in a hole 21 defined by the coupling bracket 26. The joining pin 26 is so long as to fill the hole 21 defined by the coupling bracket 26 while a free end extends some distance away from the bracket, so as to be able to be inserted in a corresponding coupling bracket of another conveyor system module. The joining pin 26 will then ensure correct positioning of two coupling brackets with respect to each other when they are brought together. Further, the joining pin 26 may be bent in order to allow an angle between two conveyor system modules being joined. A similar joining pin 26 will typically be used with another pair of coupling brackets on the other corner of the conveyor system module 1. The hole 21 defined by the coupling bracket 2 extends so far into the coupling bracket 2 as to reach the hole 23 into which a tightening screw will be arranged. If a part of the hole 23 is internally threaded a tightening screw may be screwed in so that the end of the screw exerts pressure on the joining pin 26. If the joining pin 26 has been inserted correctly into the hole 21, the tightening screw will contact the joining pin 26 at a groove 27 of the joining pin 26, whereby tightening ensures that the joining pin 26 remains in a defined correct position.

The first coupling details 28,29 are provided as follows. Typically, the main body 2 of the coupling bracket is provided with threaded holes. The coupling bracket is arranged with the threaded holes 29 placed adjoining openings in the profile element 11. Threaded screw 28 may be inserted through the holes in the profile element, into the threaded holes of the main body 2 of the coupling bracket, and then tightened. The threaded screws 28 will be inserted through corresponding holes in the profile elements 11 and then into the threaded holes 29 in the coupling bracket 2. The coupling bracket is designed in such a way that one of its surfaces can be arranged to adjoin a surface of the profile element 11. The first coupling details 29, e.g. threaded holes, in the coupling bracket are designed so as to connect the coupling bracket to a conveyor profile element 11, by, screwing screws through corresponding holes 73 (se Figure 2) in the profile element 11 and into threaded holes 29 on the coupling bracket 2.

In other words, a bracket arrangement for coupling two conveyor system modules of a conveyor system is provided wherein a first and second coupling brackets forms a first pair of brackets 90_{A} which are attachable to a first conveyor system module and which have first support means 22_{A} for supporting a first band drum 7_{A}. The first band drum 7_{A} is part of a band path of the first conveyor system module. Third and fourth coupling brackets 90_{B} forms a second pair of brackets attachable to a second conveyor system module, and which has second support means 22_{B} for supporting a second band drum 7_{B}, the second band drum being part of a band path of the second conveyor system module. First bracket coupling means 26_{A} mechanically couples the first and the third bracket. Second bracket coupling means for 26_{B} mechanically couples the second and fourth bracket. The first and second coupling means 26_{A},26_{B} effectively couples said first and second conveyor system modules, thus forming a modularized conveyor system.

The coupling bracket 2 also has the function of holding a drum axle 9 of a band drum 7. This is achieved by designing a depression 22 in the coupling bracket 2 which has sufficient depth and right form in order to allow an end of the drum axle 9 to be placed into the depression 22. The other end of the drum axle will typically be placed in a corresponding depression in a coupling bracket at another corner of the conveyor system module 1. On the drum axle 9 there is arranged a band drum 7 which is free to rotate around the axle 9 and which provides the band with freedom to move as a conveyor.

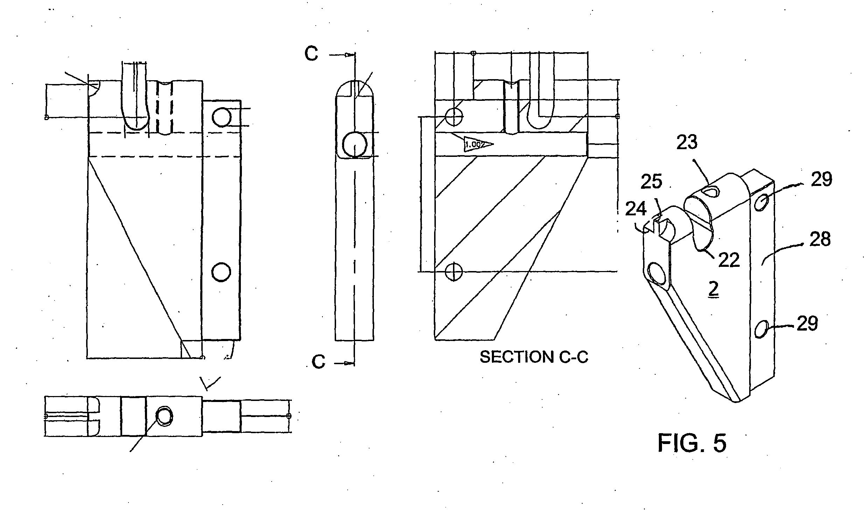

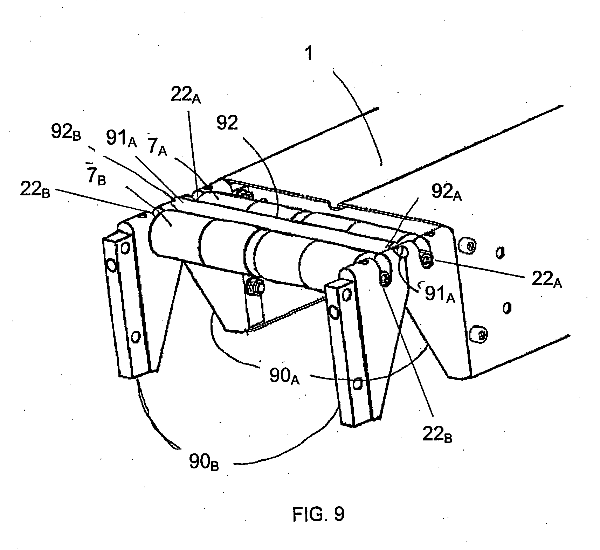

On the surface of the coupling bracket there is a pair of recesses 24, separated by a ridge 25. The recesses 24 have the shape of a sector of a cylinder. The pair of recesses is symmetrically arranged on the corners of the coupling bracket in order that the coupling bracket may be used on either corner of the conveyor system module. When the coupling brackets 2 of two adjoining conveyor system modules are brought together as illustrated in the bracket arrangement of Figure 9 (only one conveyor system module shown), the recesses 24 of a first pair of coupling brackets 90_{A} of adjoining coupling brackets may be designed in such a way that when mounted adjacent to a similar second pair of coupling brackets 90_{B}, a two cylindrical depressions 91_{A},91_{B} are formed, defining resting surfaces onto which the ends of a cylindrical pin 92 may be placed, the cylindrical pin being of sufficient length to extend the distance between the two depressions 91_{A}, 91_{B}. The coupling bracket is also illustrated alone on Figure 5.

The cylindrical pin 92 arranged as described almost closes the gap between the drums 7_{A},7_{B}. This gives two significant benefits. First of all a the objects 44 to be conveyed have a much easier transition form one conveyor system module to another. Further, the cylindrical pin 92 helps preventing objects form falling into the gap between two conveyor system modules.

Preferably, the cylindrical pin 92 is arranged between and parallel with the first band drum 7_{A} associated with a first conveyor system module and a second band drum 7_{B} associated with a second conveyor system module. Further, the a first end 92_{A} of said cylindrical pin 92 is arranged in a first recess 24A whose interior surface is shaped as a segment of a cylinder defined by the first and third brackets, and a second end 92_{B} of the cylindrical pin 92 is arranged in a second recess 24_{B} defined by the second and fourth brackets. The pin 92 is preferably also arranged at a position so as to form an auxiliary support surface for an object being transported on the conveyor bands while the object is in transfer or transition from a first conveyor system module to a second conveyor system module. The cylindrical pin 92 has a standard diameter and said recesses 24 may be designed to allocate a pin of such standard diameter.

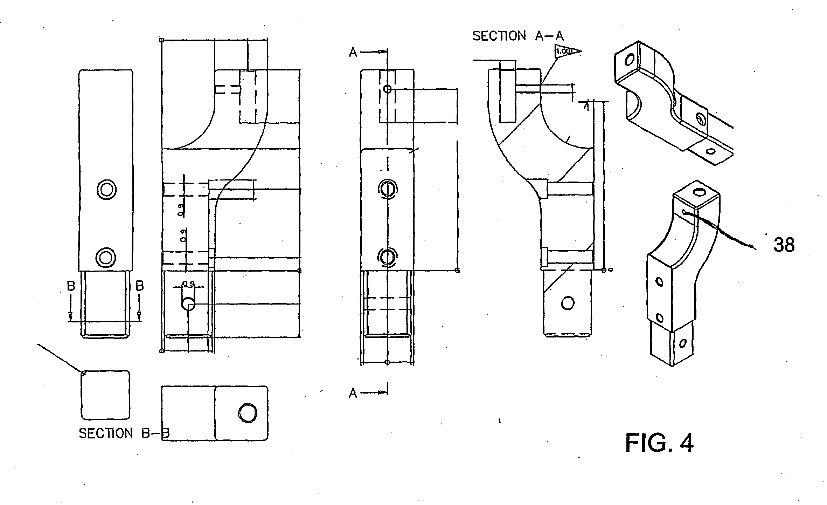

In another aspect of the invention there is provided a combined leg/guide bracket 3 arranged as a part of a conveyor system module 1 and as illustrated on Figure 3. The combined leg/guide bracket 3 according to the invention is illustrated separately on Figure 4. In the conveyor system the leg/guide bracket 3 is attachable to the profile element 11 using for example threaded screws going through holes 32, 33 in the leg/guide bracket 3 and into internally threaded holes in the profile element 11.

The leg/guide bracket provides for the mounting of various parts of a conveyor system, and it comprises a mounting bracket main body 3 having attachment details 32,33 for attaching the bracket main body 3 as part of a conveyor system 1. Mounting details 31 allows for mounting of the main bracket body 3 onto a conveyor system support element 39. The conveyor support element 39 may for example be a conveyor support leg or conveyor support frame. Support details 34 allows for supporting a conveyor system guiding arrangement 41,42.

The leg/guide bracket 3 has a generally elongated half-Y-like form and a square cross section. At a first end 36 the half-Y shaped bracket 3 extends into a leg mounting end of somewhat lower cross-section onto which, a leg having a square cross section and open interior at one end can be thread onto the bracket 3 and fastened, for example using a screw entering a first bracket hole 31. The leg/guide bracket is aligned with a surface portion of the profile element 11. At a second end 35 the leg/guide bracket 3 extends to a position which will be next to the objects transported on the band when this is in operation. At his second end 35 the leg/guide bracket bends away from the profile element 11 in order to allow a larger free space for objects being transported on the band 6.

The support details 34,35 comprises the second end 35 of the leg/guide bracket 3 and cylindrical guide system holes 34 provided in the said second end 35 for mounting a guide system pin, preferably in a substantially vertical direction. As several leg/guide brackets 3 are mounted along the conveyor system modules 1, a series of vertically mounted guide pins may be interconnected by one or more generally horizontal pins in order to define guides for the objects transported on the conveyor and prevent the objects from falling off the band when the conveyor is in operation. In the leg bracket there is also provided a hole 38 for inserting a tightening screw for a guiding pin. The hole 38 extends into the guiding pin hole 34 in order that a tightening screw may contact a guiding pin which has been inserted into the guiding pin hole 34.

Because the leg/guide elements at one end bend way from the profile elements 11 to which they are attached pin arrangement mounted onto the end of the leg/guide brackets may allow objects having dimensions slightly or somewhat larger than the width of the band to be transported on a conveyor system built from conveyor system modules according to the invention.

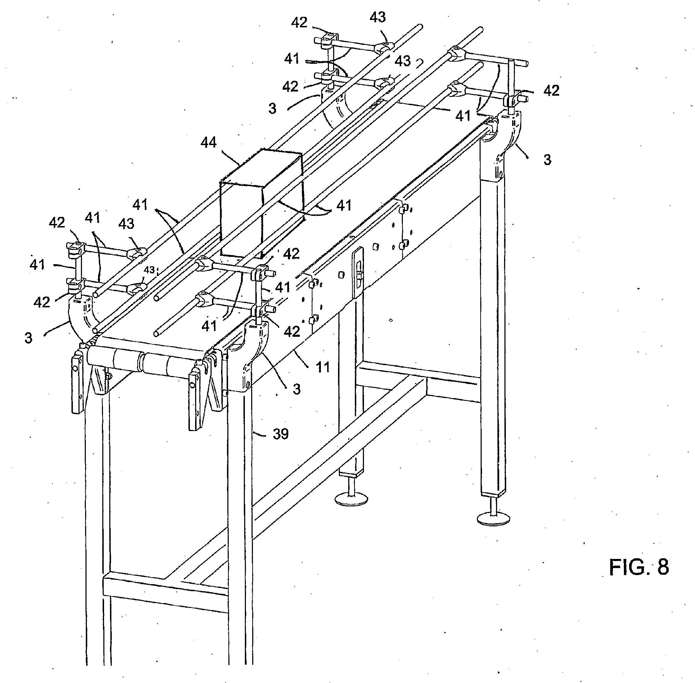

On Figure 8 there is illustrated how four combined leg/guide brackets 3 are mounted onto conveyor system support elements 39. The leg/guide brackets 3 have a lower end 37 generally smaller cross section than the middle part 36, in order that a conveyor system support elements 39 being open in at least one end and having a square cross section, preferably of standard 40x40mm square cross section, may be fitted onto the lower end 37 of the support structure 3. Each guide/leg bracket 3 is provided with mounting details 31 for attaching the conveyor support element 39 in a fixed position relative to the leg/guide bracket 3. The mounting detail 31 may be a hole or opening defined in a side wall of the lower end 37 of the leg/guide bracket through which a stopping pin can be inserted via a corresponding hole in the conveyor system support element 39. Alternatively, the mounting detail 31 may be internally threaded in order that a screw inserted through a corresponding hole of the support element 39 may be tightened so as to fix the position of the support element relative to the guide/leg bracket 3.

Onto each leg/guide bracket 3 a guide system pin 41 is mounted, onto which a number of other guide system pins 41 may be interconnected using cross clamps 42 and end clamps 43 to define a guide structure which guides objects 44 to be transported on the conveyor system from falling off the edges of the conveyor band 6. The height, length and arrangement of the guide system defined by the guiding pins 41, cross clamps 42, and end clamps 43 may vary considerably within the physical limitations in order to give the best possible guiding of the objects 44 being conveyed. In one alternative the guide system may be arranged so as to allow object 44 having a width larger than the width of the conveyor band 6 to be transported. This is possible partly because of the shape of leg/guide brackets 3 which makes it possible to mount the guide system some distance away from the edges of the band 6.

In yet another aspect of the conveyor system according to the invention there is provided is a new arrangement for drive mechanism mounting and band tightening. This is obtained by providing a bracket for releasably and adjustably mounting and holding a conveyor system drive mechanism wherein a main mounting bracket body 8 having locking details 82-86 are operable to lock a driving mechanism 9 to a conveyor system and where the locking details 82,83,84,85,86 are designed to enable tightening a band 6 of the conveyor system. This locking and tightening function will now be explained in more detail.

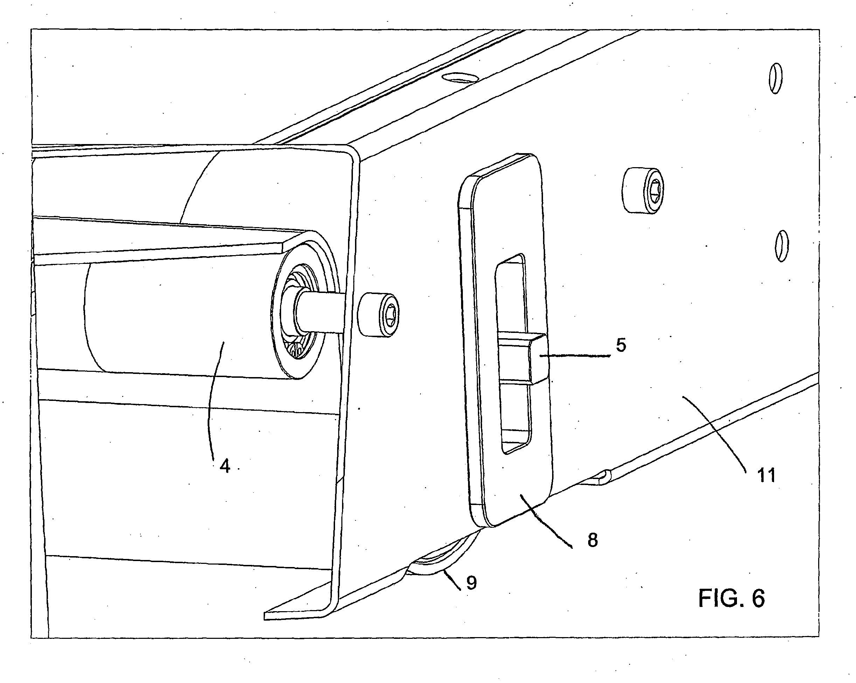

The bracket 8 has the function of mounting the conveyor drive mechanism 9 into a conveyor system module 1. A corresponding mounting opening 72 is provided in the profile element 11. The drive mechanism mounting bracket 8 is illustrated on Figure 6 as mounted on the profile element 11, showing also the axle 5 of the band drive mechanism 9, e.g. in the form of a cylinder engine with an axle 5. The band 6 may be arranged so at to be in contact with an outer surface of the cylinder engine 9, whereby the engine upon running drives the band around its loop and provides the required conveyance of the objects 44.

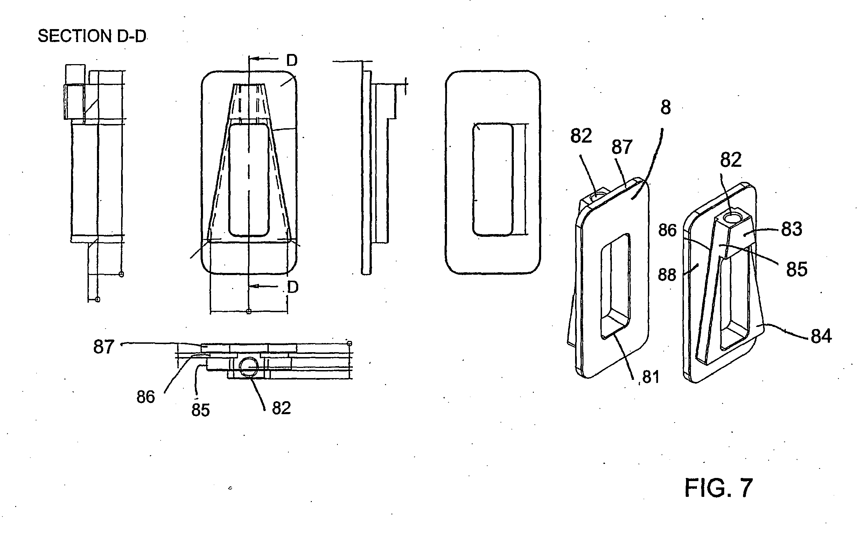

Figure 7 illustrates a mounting bracket 8 for the drive mechanism 9,5 and Figure 2 shows in a transparent view two mounting holes 72 in the profile element 11 for a drive mechanism bracket 8, wherein the drive mechanism mounting brackets 8 are entered. The drive mechanism 9,5 is mounted in the following manner. First, the two ends of an axle 5 of the drive mechanism 9,5 is inserted through two openings 72 in two opposite side walls of the profile element 11. The openings 72 preferably have the form of an iscoceles triangle having a section cut off at the angle defined by two sides of equal length. When the conveyor profile element is mounted in its normal position, the openings 72 are oriented with the cut off angle oriented in a generally upwards direction. Similarly, the generally triangularly shaped protrusion of the drive mechanism bracket 9,5 will have one angle oriented generally in an upward direction when the bracket is mounted in its normal position.

After placing the drive mechanism bracket into the openings 72 on the conveyor profile element 11, the axle 5 of the conveyor drive mechanism will rest in the openings 72. Normally, the conveyor or band drive mechanism 9 will be resting in a hanging portion of the band 6.

The axle 5 can be made of a suitable length to allow this placement to be performed relatively effortlessly. Then the drive mounting bracket 8 is inserted through the bracket mounting openings 72 in the profile element 11.

The bracket 8 has a protruding section 83,84,85 which protrudes out from a main body of the bracket 8. The protruding section 83,84,85 has a generally triangularly shaped cross section through which an opening 81 in the bracket 8 is defined. The triangular protrusion 83,84,85 of the bracket 8 has dimensions small enough so that it may pass into the bracket mounting openings 72. Normally, the triangularly shaped protrusion 83,84,85 will have a form corresponding to or similar to the form of the bracket mounting openings 72, i.e. it may have the shape of an iscoceles triangular cross section where an angle of the triangle has been cut off.

The weight of the drive mechanism 9 is resting on the band 6 which is passing over a pair of band drums, a first band drum arranged before the drive mechanism 9 and a second band drum after the drive mechanism 9, as seen in the running direction of the moving band, the drive mechanism 9 "hanging" between the these two band drive mechanisms.

When a threaded screw is inserted into an internally threaded hole 82 defined by the drive mechanism bracket 8 and a screwing/tightening action is performed, an end of the threaded screw will contact the axle 5 of the conveyor drive mechanism 9, whereafter further tightening of the screw at first will start exerting a downward directed push onto the drive mechanism. A corresponding (opposite) upwardly directed force from the axle 5 will push the tightening screw and the drive mechanism bracket 8 in a generally upwardly direction, whereby slots 86 provided in the drive mechanism bracket 8 engages the side wall portions of the conveyor profile element 11 defining the openings 72. Thus a locking of the bracket 8 to the conveyor profile element 11 is obtained, whereby the bracket will be secured to the conveyor profile element. Further tightening of the tightening screw will increase the downwards pressure on the conveyor drive mechanism 9 and the supporting band 6, whereby a tightening action on the band is achieved. Thus the form and shape of the bracket 8 provides the combined function of holding the conveyor drive mechanism in place and a tightening mechanism for the conveyor band, while maintaining the effective length and height of the conveyor system module.

In the bracket 8 there is provided an opening 82 extending from an outer surface and into the opening 81 in which the axle is placed, said opening having an at least partly threaded inside part. When a threaded screw is screwed into the opening the end of the screw will eventually contact with the axle. If the opening 81 is arranged in vertical fashion from the top of the bracket 8 and into the opening 81, the screw will upon contacting the axle 5 attempt to push the axle and drive mechanism 9 downwards. The band will to some extent prevent a downward movement of the drive mechanism and axle. Rather the band will now generate an upwardly directed equal force which will push the bracket 8 upwards, moving a narrow end of the wedge or triangle shaped part of the bracket towards the narrow end of the opening 72 in the profile element 11. When a threaded screw is tightened an upwards movement of the bracket 8 causes a slot 86 in the bracket 8 to grip around details, for example the edges, of the opening 72 in the profile element, thereby effectively locking the bracket 8 in place as long as the band is tightened by the downwardly pushed drive mechanism 9 via its axle 5. Effectively, the bracket 8 is a self-locking, a self-centering element.

The bracket 8 serves a twofold purpose; it maintains the drive mechanism in place while also providing a tightening function for the band. Access to the tightening screw of the bracket 8 is achieved by providing the profile element 8 with an opening 14 above the head of the tightening screw. In this way the band can be tightened even when the conveyor is in operation.

While the above describes how a pair of mounting bracket 8 holds a band drive mechanism, and is designed to provide both a means for holding the conveyor band tight and a means for holding an axle of a band drive device, it can be envisaged that a pair of mounting brackets 8 is used for holding an axle of a band tightening drum only, and that the band tightening drum does not perform a band drive function.

Height adjustment of single modules or a conveyor system having several modules may be obtained by providing the legs with a height adjustment possibility. Any leg height adjustment known to a person skilled in the art could in principle be used for this purpose.

Preferably, as many parts as possible in the conveyor system are made from a noncorrosive material, such as stainless steel or a similar material. Among the types of material to use in the various parts of the conveyor, two types are particularly useful.

The first type of material is a sufficiently corrosion resistant, non-absorptive rigid material to provide structural integrity, e.g. a food-grade stainless steel. Although this is a preferred material, this is not intended to exclude other materials of similar properties otherwise known to a person skilled in the art.

The other type of material is a low coefficient of sliding friction material, such as e.g. polyethylene, otherwise known as PET, preferably a ultra-high molecular weight (UHWM) polyethylene. PET type HD100 is one alternative, but this is not intended to exclude other materials of similar properties known to a person skilled in the art.

With a conveyor system having the above features, it is possible to provide a conveyor system with modules which are easy to connect, easy to mount and adjust, having a minimum of parts. Similar parts are used for several functions, for example, in this invention the pin being used for the guiding system has the same standard dimension, for example 12 mm diameter pins, is also used for the coupling bracket arrangement.

Combining several functions in single units of the conveyor system thus provides a system with a minimum of parts. For example the combination of leg bracket and guiding bracket in one single unit reduces the number of parts considerably. Also the time to assemble the conveyor system will be significantly reduced.

The arrangement for tightening and driving the conveyor band ensures that the length of the modules is fixed, i.e. conveyor band of each conveyor module can be tightened without altering the length of the module or transport path of the objects.

Further the easy-to-use and simple-to-mount coupling brackets according to this invention mean that conveyor systems of many different lengths may be provided by connecting together a number of conveyor system modules according to the invention. In the event of a fault in one conveyor system module, a faulty module may easily be replaced by a correctly functioning module. Thus the improvements provided by the present invention gives a system which can be easily assembled, reduces downtime due to replacement of faulty parts, due in part to the ease and speed at which modules and their parts may be assembled and disassembled.

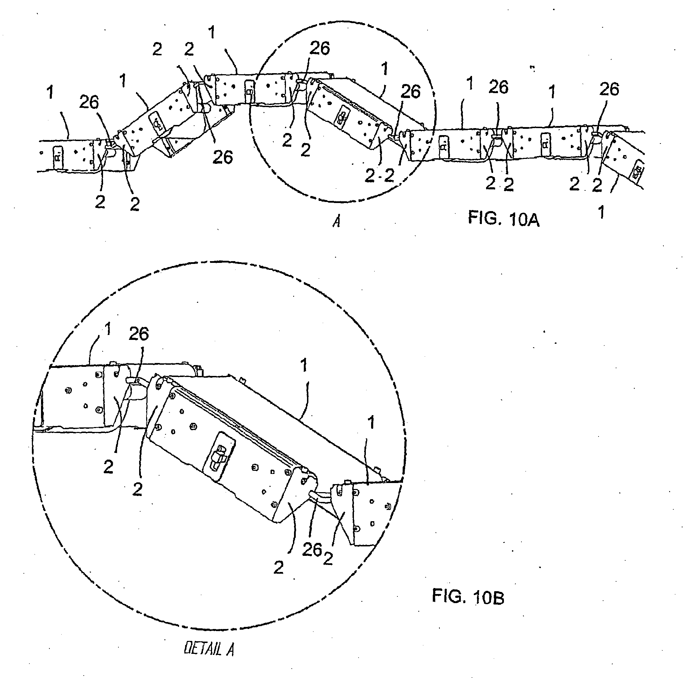

A conveyor system according to the invention may in addition be arranged so as to vary the height of the conveyor band along the length of a multi-module conveyor system. An example embodiment of this is shown in Figure 10A and the detailed Figure 10B. Figures 10A-B illustrates a multiple of individual conveyor modules 1 interconnected by pairs of connection brackets 2. Connecting elements 26, preferably in the form of pins, are used to couple a connection element of a first module 1 with a connection element of a second module 1. Figure 10A-B illustrates how connection pins 26 may not be straight, but can be provided with a bend in a middle portion in order to provide the conveyor system with a change of transport direction at the bend connection pins 26. In this way, a conveyor system may readily provide transport of items between locations at different heights. Further the height of a start-point or end-point of the conveyor system can vary, as the use of connection pins 26 of different bend angles may provide many possible conveyor configurations, and the ease mounting and removing the connection pins 26 makes the conveyor system easy to configure and reconfigure. Further, the conveyor system is to a large extent both scalable and transformable, as it is fairly easy to provide connection pins of different bend angles, thus allowing a large number of conveyor system configurations apart from a linear one.

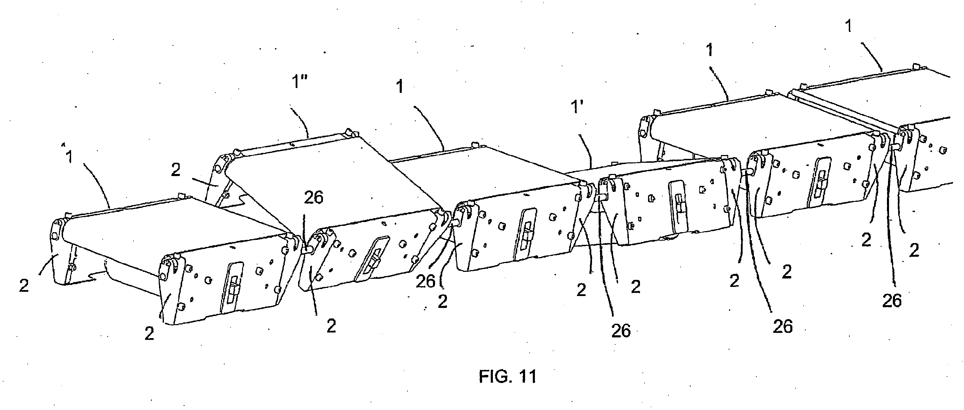

Figure 11 illustrates an even further possible embodiment of a conveyor band according to the invention, wherein a number of conveyor modules 1,1',1" initially are connected together in a substantially straight line arrangement. Two of the conveyor modules 1', 1" have been disjointed from the neighboring system modules at a first side. Because the conveyor modules are still attached at the other side, they may be tilted about an axis defined by the longitudinal axis of the remaining connection pins 26. In Figure 11 the conveyor module 1' is raised at one end. If the conveyor module 1' is raised sufficiently much, any object resting on the conveyor band of this conveyor module will slide off the conveyor band and into whatever collecting device is arranged next to the conveyr module 1' in question. This example illustrates the versatility of the present invention. If for example an item moving along a conveyor system, and is inspected by automatic inspection equipment or by an operator, an identified faulty item may be moved into a "faulty item" bin placed next to the conveyor module 1' being tilted to remove faulty items. Conveyor module 1" illustrates a similar lowering of a conveyor module on one side.

Of course, a combination of the possibilities illustrated in Figures 10 and 11 may easily be provided, as well. Finally, the connection pins 26 at one end of a conveyor system may be replaced by carrying pins (not shown), typically of the same form, but normally somewhat longer than the connection pins 26, in order to enable the pins to hold a table surface or an end basket (not shown) which can be desirable at the end of the conveyor, for example for holding a larger number of items, to be transported or having been transported, by the module conveyor system.

In summary, the present invention provides a new module based conveyor system which can be easily assembled and disassembled with a minimum of tools and operations, while also providing the possibility for reconfiguration, scalability and/or transformability of the system.

## Claims

1. Bracket for use in coupling modules of a conveyor system, comprising
- a coupling bracket main body (2),
- first coupling details (28,29) for allowing demountable mechanical coupling of said main body (2) as a part of a first conveyor system module (1),
- a support (22) for supporting a conveyor band (6) drum for guiding the conveyor band of said first conveyor system module (1),
**characterized in that** it further comprises
second coupling details (21) for allowing mechanical coupling of said module (1) to a second conveyor system module having a similar coupling bracket, wherein said second coupling details (21) are a generally cylindrical hole defined by said main body (2) and designed to receive one end of a generally cylindrical pin (26) having a standard dimension.

2. Bracket arrangement for coupling two conveyor system modules of a conveyor system, comprising
- a first and second coupling brackets forming a first pair of brackets (90_{A}), said first pair of brackets being attachable to a first conveyor system module,
- said first pair of brackets (90_{A}) having first support means (22_{A}) for supporting a first band drum (7_{A}), the first band drum being part of a band path of the first conveyor system module,
- a third and fourth coupling brackets forming a second pair of brackets (90_{B}) being attachable to a second conveyor system module,
- said second pair of brackets (90_{B}) comprising second support means (22_{B}) for supporting a second band drum (7_{B}), the second band drum being part of a band path of the second conveyor system module,
- first bracket coupling means (26_{A}) for mechanically coupling the first and the third bracket, and
- second bracket coupling means for (26_{B}) for mechanically coupling the second and fourth bracket,
whereby the first and second coupling means (26_{A}, 26_{B}) effectively couples said first and second conveyor system modules into a modularized conveyor system,
**characterized in that** the bracket arrangement comprises a bracket comprising
- second coupling details (21) for allowing mechanical coupling of a module (1) to a further conveyor system module having a similar coupling bracket wherein said second coupling details (21) are a generally cylindrical hole defined by a main body (2) and designed to receive one end of a generally cylindrical pin (26) having a standard dimension.

3. Bracket arrangement according to claim 2,
comprising a cylindrical pin (92) arranged between and parallel with the first band drum (7_{A}) associated with a first conveyor system module
and a second band drum (7_{B}) associated with a second conveyor system module.

4. Bracket arrangement according to claim 3,
wherein a first end (92A) of said cylindrical pin (92) is arranged in a first recess (24A) whose interior surface is shaped as a segment of a cylinder defined by the first and third brackets, and a second end (92B) of the cylindrical pin (92) is arranged in a second recess (24B) defined by the second and fourth brackets.

5. Bracket arrangement according to claim 4,
wherein said pin is arranged at a position so as to form an auxiliary support surface for an object being transported on the conveyor bands while the object is in transfer from the first conveyor system module to the second conveyor system module.

6. Bracket arrangement according to claim 3,
wherein said pin (92) has a standard diameter and said recesses (24) are designed to allocate a pin of such standard diameter.

7. Conveyor system comprising at least two conveyor system modules,
each module comprising a separate band and corresponding band driving mechanisms,
**characterized in that**
the conveyor system modules are coupled by a conveyor system coupling bracket arrangement according to claim 2 .

## Patentansprüche

1. Halter für die Verwendung in Verbindungsmodulen eines Fördersystems, umfassend
- einen Verbindungshalterhauptkörper (2),
- erste Verbindungsdetails (28, 29) zum Ermöglichen einer lösbaren mechanischen Verbindung des Hauptkörpers (2) als ein Teil eines ersten Fördersystemmoduls (1),
- eine Aufnahme (22) zum Aufnehmen einer Walze des Förderbands (6) zum Führen des Förderbands des ersten Fördersystemmoduls (1),
**dadurch gekennzeichnet, dass** er weiterhin
zweite Verbindungsdetails (21) zum Ermöglichen einer mechanischen Verbindung des Moduls (1) mit einem zweiten Fördersystemmodul umfasst, welches einen ähnlichen Verbindungshalter aufweist, wobei die zweiten Verbindungsdetails (21) ein im Allgemeinen zylindrisches Loch sind, welches durch den Hauptkörper (2) definiert ist und ausgestaltet ist, um ein Ende eines im Allgemeinen zylindrischen Bolzens (26), welcher eine Standarddimension aufweist, aufzunehmen.

2. Halteranordnung zum Verbinden zweier Fördersystemmodule eines Fördersystems, umfassend
- einen ersten und einen zweiten Verbindungshalter, welche ein erstes Halterpaar (90_{A}) bilden, wobei das erste Halterpaar an ein erstes Fördersystemmodul angefügt werden kann,
- wobei das erste Halterpaar (90_{A}) erste Aufnahmemittel (22_{A}) zum Aufnehmen einer ersten Bandwalze (7_{A}) aufweist, wobei die erste Bandwalze Teil eines Bandwegs des ersten Fördersystemmoduls ist,
- einen dritten und einen vierten Verbindungshalter, welche ein zweites Halterpaar (90_{B}) bilden, welches an ein zweites Fördersystemmodul angefügt werden kann,
- wobei das zweite Halterpaar (90_{B}) zweite Aufnahmemittel (22_{B}) zum Aufnehmen einer zweiten Bandrolle (7_{B}) umfasst, wobei die zweite Bandrolle Teil eines Bandwegs des zweiten Fördersystemmoduls ist,
- erste Halterverbindungsmittel (26_{A}) zum mechanischen Verbinden des ersten und des dritten Halters, und
- zweite Halterverbindungsmittel (26_{B}) zum mechanischen Verbinden des zweiten und vierten Halters,
wobei die ersten und zweiten Verbindungsmittel (26_{A}, 26_{B}) das erste und zweite Fördersystemmodul zu einem modularen Fördersystem wirksam verbinden,
**dadurch gekennzeichnet, dass** die Halteranordnung einen Halter umfasst, umfassend
- zweite Verbindungsdetails (21) zum Ermöglichen einer mechanischen Verbindung eines Moduls (1) mit einem weiteren Fördersystemmodul, welches einen ähnlichen Verbindungshalter aufweist, wobei die zweiten Verbindungsdetails (21) ein im Allgemeinen zylindrisches Loch sind, welches durch einen Hauptkörper (2) definiert ist und ausgestaltet ist, um ein Ende eines im Allgemeinen zylindrischen Bolzens (26) aufzunehmen, welcher eine Standarddimension aufweist.

3. Halteranordnung nach Anspruch 2,
umfassend einen zylindrischen Bolzen (92), welcher zwischen der mit einem ersten Fördersystemmodul verbundenen ersten Bandrolle (7_{A}) und einer mit einem zweiten Fördersystemmodul verbundenen zweiten Bandrolle (7_{B}) angeordnet und zu diesen parallel ist.

4. Halteranordnung nach Anspruch 3,
wobei ein erstes Ende (92A) des zylindrischen Bolzens (92) in einem ersten Vorsprung (24A) angeordnet ist, dessen innere Oberfläche als ein Zylindersegment geformt ist, welches durch den ersten und dritten Halter definiert ist, und ein zweites Ende (92B) des zylindrischen Bolzens (92) in einem zweiten Vorsprung (24B) angeordnet ist, welcher durch den zweiten und vierten Halter definiert ist.

5. Halteranordnung nach Anspruch 4,
wobei der Bolzen an einer Position angeordnet ist, so dass er eine Hilfsaufnahmefläche für ein Objekt bildet, welches auf den Förderbändern transportiert wird, während das Objekt vom ersten Fördersystemmodul zum zweiten Fördersystemmodul übertragen wird.

6. Halteranordnung nach Anspruch 3,
wobei der Bolzen (92) einen Standarddurchmesser aufweist und die Vorsprünge (24) ausgestaltet sind, um einen Bolzen von einem solchen Standarddurchmesser aufzunehmen.

7. Fördersystem umfassend zumindest zwei Fördersystemmodule,
wobei jedes Modul ein separates Band und entsprechende Bandantriebsmechanismen umfasst,
**dadurch gekennzeichnet, dass**
die Fördersystemmodule durch eine Fördersystemverbindungshalteranordnung nach Anspruch 2 verbunden sind.

## Revendications

1. Etrier destiné à être utilisé dans des modules de couplage d'un système convoyeur, comprenant
- un corps principal (2) d'étrier de couplage,
- des premiers éléments de couplage (28, 29) destinés à permettre un couplage mécanique démontable dudit corps principal (2) comme faisant partie d'un premier module de système convoyeur (1),
- un support (22) pour supporter un tambour d'une bande convoyeuse (6) afin de guider la bande convoyeuse dudit premier module (1) de système convoyeur,
**caractérisé en ce qu'**il comprend en outre
des seconds éléments de couplage (21) destinés à permettre un couplage mécanique dudit module (1) à un second module de système convoyer possédant un étrier de couplage similaire, lesdits seconds éléments de couplage (21) étant un trou généralement cylindrique défini par ledit corps principal (2) et conçu pour recevoir une extrémité d'une broche (26) généralement cylindrique ayant une dimension standard.

2. Agencement d'étrier pour un couplage de deux modules de système convoyeur d'un système convoyeur, comprenant
- des premier et deuxième étriers de couplage formant une première paire d'étriers (90_{A}), ladite première paire d'étriers pouvant être attachés à un premier module de système convoyeur,
- ladite première paire d'étriers (90_{A}) possédant un premier moyen de support (22_{A}) pour supporter un premier tambour de bande (7_{A}), le premier tambour de bande faisant partie d'un passage de bande du premier module de système convoyeur,
- des troisième et quatrième étriers de couplage formant une seconde paire d'étriers (90_{B}) qui peuvent être attachés à un second module de système convoyeur,
- ladite seconde paire d'étriers (90_{B}) comprenant un second moyen de support (22_{B}) pour supporter un second tambour de bande (7_{B}), le second tambour de bande faisant partie d'un passage de bande du second module de système convoyeur,
- un premier moyen de couplage (26_{A}) d'étrier pour coupler mécaniquement le premier et le troisième étriers, et
- un second moyen de couplage (26_{B}) d'étrier pour coupler mécaniquement le deuxième et le quatrième étriers,
grâce à quoi les premier et second moyens de couplage (26_{A}, 26_{B}) couplent efficacement lesdits premier et second modules de système convoyeur en un système convoyeur modularisé,
**caractérisé en ce que** l'agencement d'étrier comprend un étrier comprenant
- des seconds éléments de couplage (21) destinés à permettre un couplage mécanique d'un module (1) à un autre module de système convoyeur possédant un étrier de couplage similaire, ledit second élément de couplage (21) étant un trou généralement cylindrique défini par un corps principal (2) et conçu pour recevoir une extrémité d'une broche généralement cylindrique (26) ayant une dimension standard.

3. Agencement d'étrier selon la revendication 2,
comprenant une broche cylindrique (92) agencée entre les, et parallèle aux, premier tambour de bande (7_{A}) associé à un premier module de système convoyeur
et second tambour de bande (7_{B}) associé à un second module de système convoyeur.

4. Agencement d'étrier selon la revendication 3,
dans lequel une première extrémité (92A) de ladite broche cylindrique (92) est agencée dans un premier renfoncement (24A) dont la surface intérieure est formée en tant que segment d'un cylindre défini par les premier et troisième étriers, et une seconde extrémité (92B) de la broche cylindrique (92) est agencée dans un second renfoncement (24B) défini par les deuxième et quatrième étriers.

5. Agencement d'étrier selon la revendication 4,
dans lequel ladite broche est agencée au niveau d'une position de manière à former une surface de support auxiliaire pour un objet transporté sur les bandes convoyeuses tandis que l'objet est en transfert du premier module de système convoyeur vers le second module de système convoyeur.

6. Agencement d'étrier selon la revendication 3,
dans lequel ladite broche (92) a un diamètre standard et lesdits renfoncements (24) sont conçus pour héberger use broche d'un tel diamètre standard.

7. Système convoyeur comprenant au moins deux modules de système convoyeur,
chaque module comprenant une bande séparée et des mécanismes d'entraînement de bande correspondants,
**caractérisé en ce que**
les modules de système convoyeur sont couplés par un agencement d'étrier de couplage de système convoyeur selon la revendication 2.
